# EUROPÄISCHE PATENTSCHRIFT

(11) **EP 3 656 167 B1**
(45) Veröffentlichungstag und Bekanntmachung des Hinweises auf die Patenterteilung: **10.11.2021**
(21) Anmeldenummer: 18731779.7
(22) Anmeldetag: 11.06.2018
(51) Int. Cl.: H04W 72/12, H04W 76/14, H04W 56/00

(54) **VERFAHREN ZUM BETREIBEN EINER NETZWERKINFRASTRUKTURSEITIGEN NETZWERKEINHEIT, NETZWERKINFRASTRUKTURSEITIGE NETZWERKEINHEIT, VERFAHREN ZUM BETREIBEN EINER STRASSENSEITIGEN NETZWERKEINHEIT, STRASSENSEITIGE NETZWERKEINHEIT**
METHOD FOR OPERATING A NETWORK-INFRASTRUCTURE NETWORK UNIT, NETWORK-INFRASTRUCTURE NETWORK UNIT, METHOD FOR OPERATING A ROADSIDE NETWORK UNIT, AND ROADSIDE NETWORK UNIT
PROCÉDÉ DE FONCTIONNEMENT D'UNE UNITÉ DE RÉSEAU CÔTÉ INFRASTRUCTURE DE RÉSEAU, UNITÉ DE RÉSEAU CÔTÉ INFRASTRUCTURE DE RÉSEAU, PROCÉDÉ DE FONCTIONNEMENT D'UNE UNITÉ DE RÉSEAU CÔTÉ ROUTE, UNITÉ DE RÉSEAU CÔTÉ ROUTE

(30) Priorität: 18.07.2017 DE 102017212244; 13.10.2017 DE 102017218320
(43) Veröffentlichungstag der Anmeldung: 27.05.2020
(73) Patentinhaber: Robert Bosch GmbH, 70442 Stuttgart (DE)
(72) Erfinder: ECKERT, Kurt, 71254 Ditzingen (DE); SVEJKOVSKY, Peter, 71272 Renningen (DE); DUENGEN, Monique, 30451 Hannover (DE); HOFMANN, Frank, 31139 Hildesheim (DE); HAAS, Christine, 71634 Ludwigsburg (DE); THEIN, Christoph, 31139 Hildesheim (DE)
(86) Internationale Anmeldenummer: PCT/EP2018/065290
(87) Internationale Veröffentlichungsnummer: WO 2019/015870

(56) Entgegenhaltungen:
- EP-A1- 3 133 896
- US-A1- 2016 338 094
- US-A1- 2017 099 624

## Beschreibung

### Stand der Technik

Die Erfindung betrifft ein Verfahren zum Betreiben einer netzwerkinfrastrukturseitigen Netzwerkeinheit, eine netzwerkinfrastrukturseitige Netzwerkeinheit, ein Verfahren zum Betreiben einer straßenseitigen Netzwerkeinheit und eine straßenseitige Netzwerkeinheit.

EP 3 133 896 A1 offenbart ein Kommunikationssteuerungsverfahren, welches umfasst: einen Schritt, in dem durch eine erste eNB eine Zuweisung einer D2D-Kommunikationsressource an eine zweite eNB angefordert wird; einen Schritt, in dem durch die zweite eNB auf der Grundlage der Anforderung der ersten eNB die D2D-Kommunikationsressource aus einem bestimmten Frequenzband, das von einer Vielzahl von Mobilfunknetzbetreibern oder einer Vielzahl von Kommunikationssystemen gemeinsam genutzt wird, der ersten eNB zugewiesen wird; und einen Schritt der Durchführung der D2D-Kommunikation durch die erste eNB unter Verwendung der vom der zweiten eNB zugewiesenen D2D-Kommunikationsressource.

US 2016/0338094 A1 offenbart ein Verfahren zur Zuweisung von Ressourcen für die Übertragung von Gerät zu Gerät zwischen zwei oder mehr Benutzergeräten (UEs). Eine Ressourcenanforderung für eine Geräte-zu-Geräte-Übertragung wird vom zweiten Gerät empfangen. Als Antwort auf die Ressourcenanforderung wird am ersten Gerät eine Ressource für die Übertragung von Gerät zu Gerät ausgewählt. Eine Ressourcenzuteilung wird an das zweite Gerät übertragen. Die Ressourcenzuteilung identifiziert die ausgewählte Ressource. Eine Übertragung von Gerät zu Gerät wird vom zweiten Gerät über die ausgewählte Ressource empfangen.

Weiterhin bietet die Druckschrift US 2017/099624 A1 (BAGHEL SUDHIR KUMAR [US] ET AL) 6. April 2017 eine Übersicht des Stands der Technik.

Es ist bekannt, dass bereits heute Fahrzeuge in der Lage sind, Informationen mit anderen Fahrzeugen in deren Nähe (V2V: Vehicle to Vehicle) auszutauschen. Auch können Fahrzeuge mit straßenseitiger Infrastruktur drahtlos kommunizieren (V2I: Vehicle to Infrastructure). Ebenso kann das Fahrzeug mit einem Backend-Server im Internet (V2N: Vehicle to Network) oder mit einem Fußgänger-Endgerät (V2P: Vehicle to Person) drahtlos kommunizieren. Diese Kommunikation wird insgesamt auch als Vehicle-to-Everything (V2X) bezeichnet.

Die Entwicklung neuer Funktionen und Dienstleistungen in der Automobilindustrie wie beispielsweise automatisiertes Fahren profitiert von V2X. Verkehrssicherheit, Fahrkomfort und Energieeffizienz können verbessert werden. Dies führt zu neuen Produkten und Geschäftsmodellen für Autohersteller, Automobilzulieferer und andere Dienstleister.

Die erste Generation der V2X-Anwendungen, die in den kommenden Jahren eingesetzt werden soll, ist hauptsächlich auf die Anwendung auf der Straße bezogen. Ihr Ziel ist es, dem Fahrer Informationen über das Straßenumfeld bereitszustellen. Fahrzeuge stellen periodisch Statusinformationen (z. B. Position, Geschwindigkeit, Beschleunigung usw.) und/oder Ereignisinformation (Rettungseinsatz, liegen gebliebenes Fahrzeug, Stau) bereit. Diese Informationen werden in der Regel in Form von Kurzmitteilungen lokal abgesetzt. Von benachbarten Fahrzeugen kann diese ereignisbasierte Information an eine zentrale Netzwerkeinheit (Basisstation, Backend) geschickt werden.

Für V2X Direct Device-to-Device (D2D) Kommunikation gibt es derzeit zwei konkurrierende Technologien. Die erste Technologie basiert funktechnisch auf dem IEEE802.11 p Standard, welcher die Basis für die übergreifenden Standards DSRC (Dedicated Short Range Communication) in den USA und ETSI ITS G5 (ETSI: European Telecommunications Standards Institute; ITS: Intelligent Transport Systems) in Europa bildet. Die zweite Technologie basiert auf 3GPP (3rd Generation Partnership Project) LTE (Long Term Evolution) und ist auch unter dem Kürzel LTE-V2X bekannt. Eine Weiterentwicklung der LTE-V2X-Technologie wird mit 5G (5th generation mobile networks) erwartet.

Der IEEE 802.11p-Standard verwendet die PHY-Schicht des IEEE 802.11a-Standards auf der Grundlage von Orthogonal Frequency Division Multiplexing (OFDM) mit einigen Modifikationen. Die MAC-Schicht basiert auf dem Enhanced Distributed Channel Access (EDCA), welcher konkurrenzbasiert ist. Des Weiteren wird Carrier Sense Multiple Access (CSMA) mit Collision Avoidance (CSMA / CA) verwendet. CSMA / CA folgt dem Listen-Before-Talk-Prinzip, um Kollisionen auf dem Kanal zu minimieren. Wenn eine Netzwerkeinheit (in diesem Zusammenhang ein Fahrzeug) Daten zu übermitteln hat, führt diese eine Kanalmessung durch, um zu überprüfen, ob der Kanal besetzt ist. Wenn der Kanal als leer wahrgenommen wird, wartet die Netzwerkeinheit mit der geplanten Übertragung eine zufallsermittelte Zeit ab und beginnt dann mit der Übertragung. Wenn der Kanal während der Kanalmessung belegt ist, so wird die Netzwerkeinheit eine Backoff-Prozedur durchführen, d. h. sie wartet mit dem nächsten Kanalzugriff eine zufallsermittelte Zeitperiode ab. Je höher die Anzahl der Netzwerkeinheiten ist, die in einem geografischen Gebiet zu senden versuchen, desto höher ist die Wahrscheinlichkeit, dass eine Netzwerkeinheit ihre Übertragung verzögert, was zu insgesamt erhöhten Verzögerungen im Netzwerk führt. Der IEEE 802.11p-Standard bietet gegenüber anderen WLAN-Standards auf Basis von IEEE 802.11 Vorteile in Bezug auf Latenz und Signalisierungsaufwand und ist auf den Anwendungsfall V2V angepasst.

Die LTE-Erweiterung für V2X ab dem 3GPP Release 14 schlägt vor, ein lizenziertes und/oder ein nicht lizenziertes Spektrum für die Kommunikation zu nutzen. Die V2V-Kommunikation basiert auf einer direkten Device-to-Device-Schnittstelle (auch als Sidelink-Schnittstelle an der physikalischen Schicht bezeichnet). Im Gegensatz zu 802.11p geschieht die Übertragung zellgestützt, d. h. durch das Netzwerk geplant durchführt. Übertragungsrechte werden von einer Scheduler-Einheit, die sich in der Basisstation befindet, erteilt, sodass Kollisionen vermieden und Störungen minimiert werden. Die Kontrolle durch die Basisstation kann nur in Bereichen durchgeführt werden, in denen das Basisstationsignal verfügbar ist (in-coverage). In einem Fall, in dem kein Basisstationssignal zur Verfügung steht (out-of-coverage), findet die Kommunikation mit vordefinierten Parametern über den Sidlink statt.

Die 5G Automotive Association (5GAA) möchte das 5,9 GHz ITS-Frequenzspektrum, auf dem auch die ITS-G5-Systeme arbeiten, verwenden. Dies stellt eine Bedrohung für die Zukunft der ITS-G5-Systeme und deren Einsatz dar, da einige Automobilhersteller ihre Pläne bereits angekündigt haben, ITS-G5-basierte Systeme in ihrem Autos zu verbauen. Damit würden zwei unterschiedliche Drahtloskommunikationssysteme im gleichen nicht lizenzierten Frequenzbereich senden und es ergäben sich Leistungsverschlechterungen für beide Technologien.

Mithin könnte man eine objektive technische Aufgabe dahingehend formulieren, als dass ein Koexistenzmechanismus für die zwei unterschiedliche Drahtloskommunikationstechnologien zu schaffen ist, um auf einem gemeinsamen Frequenzbereich vorhandenen Ressourcen fair aufzuteilen.

### Offenbarung der Erfindung

Das der Erfindung zugrunde liegende Problem wird durch ein Verfahren zum Betreiben einer netzwerkinfrastrukturseitigen Netzwerkeinheit nach dem Anspruch 1, durch eine netzwerkinfrastrukturseitige Netzwerkeinheit nach einem nebengeordneten Anspruch, ein Verfahren zum Betreiben einer straßenseitigen Netzwerkeinheit nach einem nebengeordneten Anspruch und eine straßenseitige Netzwerkeinheit nach einem nebengeordneten Anspruch gelöst.

Gemäß einem ersten und zweiten Aspekt wird die netzwerkinfraststrukturseitige Netzwerkeinheit folgendermaßen betrieben: Empfangen einer Scheduling-Request-Nachricht für einen Sidelink-Kanal in einem nicht-lizenzierten Frequenzbereich auf einem Uplink-Kanal von einer straßenseitigen Netzwerkeinheit, wobei die Scheduling-Request-Nachricht eine Größe von Daten, welche zum Versand auf dem Sidelink-Kanal bei der straßenseitigen Netzwerkeinheit bereitstehen, indiziert; Ermitteln einer Scheduling-Grant-Nachricht in Abhängigkeit von der Größe, wobei die Scheduling-Grant-Nachricht eine Zuweisung einer Anzahl von Sidelink-Ressourcen des Sidelink-Kanals zu der straßenseitigen Netzwerkeinheit umfasst, und wobei die zugewiesene Anzahl von Sidelink-Ressourcen ausreicht, um die bereitstehenden Daten und weitere Daten zu versenden; und Versenden der Scheduling-Grant-Nachricht auf einem Downlink-Kanal an die straßenseitige Netzwerkeinheit.

Gemäß einem dritten und vierten Aspekt wird die straßenseitige Netzwerkeinheit folgendermaßen betrieben: Ermitteln von Daten einer Größe zum Versand an zumindest eine weitere straßenseitige Netzwerkeinheit; Ermitteln einer Scheduling-Request-Nachricht für einen Sidelink-Kanal in einem nicht-lizenzierten Frequenzbereich, wobei die Scheduling-Request-Nachricht die Größe der Daten, welche zum Versand auf dem Sidelink-Kanal bei der straßenseitigen Netzwerkeinheit bereitstehen, indiziert; Versenden der Scheduling-Request-Nachricht für den Sidelink-Kanal auf einem Uplink-Kanal an eine netzwerkinfrastrukturseitige Netzwerkeinheit Empfangen einer Scheduling-Grant-Nachricht, wobei die Scheduling-Grant-Nachricht eine Zuweisung einer Anzahl von Sidelink-Ressourcen des Sidelink-Kanals zu der straßenseitigen Netzwerkeinheit umfasst, und wobei die Anzahl der zugewiesenen Sidelink-Ressourcen ausreicht, um die bereitstehenden Daten und weitere Daten von anderen Netzwerkeinheiten zu versenden; Überprüfen, ob die zugewiesenen Sidelink-Ressourcen auf dem Sidelink-Kanal frei sind; und Versenden der Daten auf den zugewiesenen Sidelink-Ressourcen des Sidelink-Kanals in dem nicht lizenzierten Frequenzbereich, sobald die zugewiesenen Sidelink-Ressourcen auf dem Sidelink-Kanal frei sind.

Durch das Reservieren von Sidelink-Ressourcen für weitere Daten von anderen Netzwerkeinheiten stehen der straßenseitigen Netzwerkeinheit genügend Sidelink-Ressourcen zur Verfügung, um die ermittelten auf dem Sidelink-Kanal erfolgreich zu übertragen. Sollten die zugeteilten Sidelink-Ressourcen belegt sein, wartet die straßenseitige Netzwerkeinheit zunächst ab, bis die die Sidelink-Ressourcen frei sind. Eine Kollissionswahrscheinlichkeit wird damit reduziert. Folglich wird im zeitlich ersten Bereich der zugeteilten Sidelink-Ressourcen eine weitere straßenseitige Netzwerkeinheit, welche gerade in diesem Frequenzbereich sendet, bevorteilt. Des Weiteren beginnt die straßenseitige Netzwerkeinheit im Falle der Feststellung der Belegung der zugewiesenen Sidelink-Ressourcen selbstständig die Übertragung auf dem Sidelink-Kanal, ohne dass hierzu weiterer Signalisierungsaufwand durch die netzwerkinfrastrukturseitige Netzwerkeinheit nötig wäre.

Insgesamt ermöglichen die vorgeschlagenen Verfahren und Straßeneinheiten vorteilhaft eine faire Ressourcenaufteilung zwischen zwei im selben Frequenzbereich operierenden Drahtloskommunikationsnetzwerken.

Weitere Merkmale und Vorteile finden sich in der nachfolgenden Beschreibung von Ausführungsbeispielen. In der Zeichnung zeigen:
- Figur 1: ein erstes zell-basiertes Drahtloskommunikationsnetzwerk und ein zweites Drahtloskommunikationsnetzwerk;
- Figuren 2 und 3: jeweils ein schematisches Ablaufdiagramm;
- Figuren 4-6: jeweils ein schematisches Zeit-Frequenz-Diagramm; und
- Figur 7: ein schematisches Sequenzdiagramm.

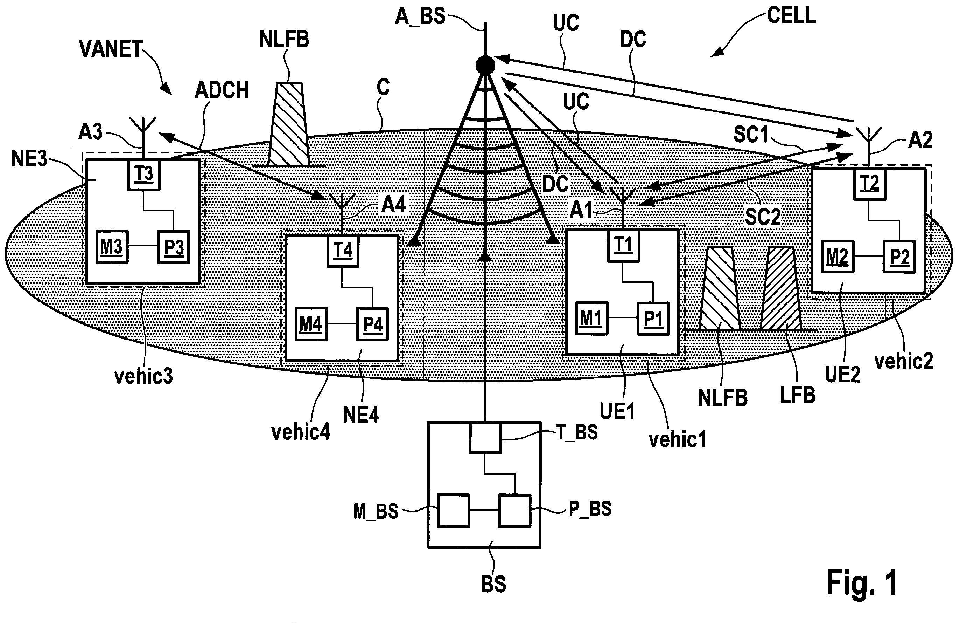

Figur 1 zeigt ein zell-basiertes Drahtloskommunikationsnetzwerk CELL und ein Adhoc-Drahtloskommunikationsnetzwerk VANET. Das zell-basierte Drahtloskommunikationsnetzwerk CELL umfasst eine netzwerkinfrastrukturseitige Netzwerkeinheit BS, eine straßenseitige Netzwerkeinheit UE1 und eine straßenseitige Netzwerkeinheit UE2. Die netzwerkinfrastrukturseitige Netzwerkeinheit BS umfasst einen Prozessor P_BS, ein Speicherelement M_BS, und einen Transceiver T_BS. Die netzwerkinfrastrukturseitige Netzwerkeinheit BS ist auch als Basisstation oder eNodeB bezeichenbar. Die netzwerkinfrastrukturseitige Netzwerkeinheit BS ist mit einer stationären Antenne A_BS verbunden, um Daten auf einem Downlink-Kanal DC zu senden und Daten auf einem Uplink-Kanal UC zu empfangen. Die Antenne A_BS umfasst beispielsweise eine Anzahl von Antennen und ist beispielsweise als Remote Radio Head, RRH, ausgeführt. Die netzwerkinfrastrukturseitige Netzwerkeinheit BS und die Antenne A_BS stellen eine Zelle C bereit, innerhalb derer die straßenseitigen Netzwerkeinheiten UE1 und UE2 mit der Netzwerkeinheit BS kommunizieren können. Selbstverständlich kann die netzwerkinfrastrukturseitige Netzwerkeinheit BS im Rahmen einer Virtualisierung auch verteilt aufgebaut sein und aus vereinzelten Netzwerkeinheiten bestehen. Die Netzwerkeinheiten BS, UE1 und UE2 sind beispielsweise nach dem LTE-V2X-Standard konfiguriert.

Die straßenseitige Netzwerkeinheit UE1 umfasst einen Prozessor P1, ein Speicherelement M1, einen Transceiver T1 und eine Antenne A1. Die straßenseitige Netzwerkeinheit UE2 umfasst einen Prozessor T2, ein Speicherelement M2, einen Transceiver T2 und eine Antenne A2.

Die beiden straßenseitigen Netzwerkeinheiten UE1, UE2 befinden sich innerhalb der Zelle'C, und sind fähig, Daten auf dem Downlink-Kanal DC zu empfangen und Daten auf dem Uplink-Kanal UC zu versenden. Die beiden straßenseitigen Netzwerkeinheiten UE1, UE2 sind fähig, direkt miteinander über einen Sidelink-Kanal SC1 in einem nicht-lizenzierten Frequenzbereich NLFB und über einen Sidelink-Kanal SC2 in einem lizenzierten Frequenzbereich LFB zu kommunizieren.

In dieser Beschreibung wird auf den einzigen Uplink-Kanal UC und den einzigen Downlink-Kanal DC Bezug genommen. Beispielsweise umfasst der Uplink-Kanal UC und der Downlink-Kanal DC jeweilige Unterkanäle, d. h. es stehen mehrere Kanäle im Uplink als auch im Downlink zur Verfügung. Gleiches gilt für die Sidelink-Kanäle SC1, SC2.

Das Adhoc-Drahtloskommunikationsnetzwerk VANET umfasst straßenseitige Netzwerkeinheiten NE3 und NE4. Die Netzwerkeinheit NE3 umfasst einen Prozessor P3, ein Speicherelement M3, einen Transceiver T3 und eine Antenne A3. Die Netzwerkeinheit NE4 umfasst einen Prozessor P4, ein Speicherelement M4, einen Transceiver T4 und eine Antenne A4. Die Transceiver T3 und T4 sind beispielsweise nach dem Standard IEEE 802.11p konfiguriert. Die Netzwerkeinheiten NE3 und NE4 kommunizieren direkt miteinander über einen Adhoc-Kanal ADCH in dem nicht lizenzierten Frequenzbereich NLFB. Der Adhoc-Kanal ADCH wird über ein CSMA/CA-Protokoll (CSMA/CA: Carrier Sense Multiple Access/Collision Avoidance) von den Transceivern T3, T4 arbitriert.

Die Netzwerkeinheiten NE3 und NE4 befinden sich in der Nähe der Netzwerkeinheiten UE1 und UE2. Durch diese Nähe kann die jeweilige Sendeleistung ausreichen, sodass Übertragungen auf den Kanälen ADCH und SC1, welche im gleichen nicht lizenzierten Frequenzbereich NLFB übertragen werden, sich gegenseitig nachteilhaft beeinflussen. Ziel dieser Beschreibung ist es, diese gegenseitige nachteilhafte Beeinflussung zu reduzieren.

Die straßenseitigen Netzwerkeinheiten UE1, UE2, NE3 und NE4 sind in jeweiligen Kraftfahrzeugen vehic1, vehic2, vehic3, vehic4 angeordnet und mit einem jeweils dort angeordneten nicht gezeigten Steuergerät zum Datenaustausch verbunden. Alternativ sind die straßenseitigen Netzwerkeinheiten UE1, UE2, NE3 und NE4 Teil des Steuergeräts in dem jeweiligen Kraftfahrzeug vehic1, vehic2, vehic3. In einer weiteren alternativen Ausführungsform sind die straßenseitigen Netzwerkeinheiten UE1, UE2, NE3 und NE4 anstatt in einem Kraftfahrzeug in einer feststehenden Infrastruktur wie beispielsweise einer Ampel angeordnet.

Die Sidelink-Kanäle SC1, SC2 und ein Sidelink im allgemeinen sind beispielsweise durch das Dokument 3GPP TS 36.300 V14.2.0 (2017-03) definiert.

Der Sidelink umfasst Sidelink Discovery, Sidelink-Kommunikation und V2X-Sidelink-Kommunikation zwischen den Netzwerkeinheiten UE1, UE2. Der Sidelink verwendet Uplink-Ressourcen und eine physikalische Kanalstruktur ähnlich wie die des Uplinks. Der Sidelink unterscheidet sich also vom Uplink in Bezug auf den physikalischen Kanal.

Der Sidelink ist auf einzelne Clusterübertragungen für die physikalischen Sidelink-Kanäle begrenzt. Weiterhin verwendet der Sidelink eine 1-Symbol-Lücke am Ende jedes Sidelink-Subframe. Für die V2X-Sidelink-Kommunikation werden PSCCH, Physical Sidelink Control Channel, und PSSCH, Physical Sidelink Shared Channel, im gleichen Subframe übertragen. Die Sidelink-Kanäle SC1, SC2 sind beispielsweise der PSSCH.

Die physikalische Schichtverarbeitung von Transportkanälen im Sidelink unterscheidet sich von der Uplink-Übertragung in den folgenden Schritten: Scrambling: Für PSDCH, Physical Sidelink Discovery Channel, und PSCCH ist das Scrambling nicht spezifisch für die Netzwerkeinheit; Modulation: 64 QAM und 256 QAM wird für den Sidelink nicht unterstützt (QAM: Quadrature amplitude modulation). Der PSCCH gibt Sidelink-Ressourcen und andere Übertragungsparameter an, die von der jeweiligen Netzwerkeinheit UE1, UE2 für den PSSCH verwendet werden.

Für die PSDCH-, PSCCH- und PSSCH-Demodulation werden Referenzsignale ähnlich den Uplink-Demodulationsreferenzsignalen im 4-ten Symbol des Slots im normalen CP, Cyclic Prefix, und im dritten Symbol des Slots im erweiterten CP übertragen. Die Sidelink-Demodulationsreferenzsignal-Sequenzlänge entspricht der Größe (Anzahl der Subcarrier) der zugeordneten Ressource. Für die V2X-Sidelink-Kommunikation werden Referenzsignale in den 3. und 6. Symbolen des ersten Slots und in den 2. und 5. Symbolen des zweiten Slots im CP übertragen. Für PSDCH und PSCCH werden Referenzsignale basierend auf einer festen Basissequenz, zyklischem Shift und orthogonalem Cover Code erzeugt. Für die V2X-Sidelink-Kommunikation wird der zyklische Shift für PSCCH zufällig bei jeder Übertragung ausgewählt.

Für Messungen des jeweiligen Sidelink-Kanals SC1, SC2 stehen auf der Seite der Netzwerkeinheiten UE1, UE2 folgende Möglichkeiten zur Verfügung: Empfangsleistung des Sidelink-Referenzsignals (S-RSRP); Empfangsleistung des Sidelink-Discovery-Referenzsignals (SD-RSRP); Empfangsleistung des PSSCH-Referenzsignals (PSSCH-RSRP); Signalstärkeindikator für Sidelink-Referenzsignale (S-RSSI).

Der Adhoc-Kanal ADCH und das Adhoc-Drahtloskommunikationsnetzwerk VANET sind beispielsweise durch den IEEE-Standard "802.11p-2010 - IEEE Standard for Information technology-- Local and metropolitan area networks-Specific requirements-- Part 11: Wireless LAN Medium Access Control (MAC) and Physical Layer (PHY) Specifications Amendment 6: Wireless Access in Vehicular Environments" definiert.

IEEE 802.11p ist ein Standard zur Erweiterung des WLAN-Standards IEEE 802.11. Die Zielrichtung von IEEE 802.11p ist es, die WLAN-Technik in Personen-Kraftfahrzeugen zu etablieren und eine zuverlässige Schnittstelle für Anwendungen intelligenter Verkehrssysteme (engl. Intelligent Transport Systems, ITS) zu schaffen. IEEE 802.11p ist auch Basis für Dedicated Short Range Communication (DSRC) im Frequenzband von 5,85 bis 5,925 GHz. Um Verwechslungen mit der europäischen DSRC Version zu vermeiden, wird vor allem in Europa eher der Begriff ITS-G5 anstatt DSRC verwendet.

Das Dokument "ETSI EN 302 663 V1.2.0 (2012-1)" beschreibt beider untersten Schichten der ITS-G5-Technologie (ITS G5: Intelligent Transport Systems operating in the 5 GHz frequency band), die physikalische Schicht und die Datenverbindungsschicht. Die Transceiver T3 und T4 realisieren beispielsweise mindestens diese beiden untersten Schichten und korrespondierende Funktionen nach " ETSI EN 302 663 V1.2.0 (2012-11)", um den Adhoc-Kanal ADCH zu verwenden. Für die Verwendung des Adhoc-Kanals ADCH stehen in Europa die folgenden nicht lizenzierten Frequenzbereiche zur Verfügung, welche Teil des nicht-lizenzierten Frequenzbereichs NLFB sind: 1) ITS-G5A für sicherheitsrelevante Anwendungen im Frequenzbereich von 5,875 GHz bis 5,905 GHz; 2) ITS-G5B für nicht-sicherheitsrelevante Anwendungen im Frequenzbereich von 5.855 GHz bis 5.875 GHz; und 3) ITS-G5D für den Betrieb von ITS-Anwendungen im Frequenzbereich 5,905 GHz bis 5.925 GHz. ITS-G5 ermöglicht eine Kommunikation zwischen den zwei Netzwerkeinheiten UE1 und UE2 außerhalb des Kontextes einer Basistation. ITS-G5 ermöglicht den sofortigen Austausch von Datenrahmen und vermeidet einen Management-Overhead, der bei der Einrichtung eines Netzwerks verwendet wird.

Das Dokument "ETSI TS 102 687 V1.1.1 (2011 -07)" beschreibt für ITS-G5 einen "Decentralized Congestion Control Mechanisms". Der Adhoc-Kanal ADCH dient unter anderem dem Austausch von Daten betreffend die Verkehrssicherheit und die Verkehrseffizienz. Die Transceiver T3 und T4 realisieren beispielsweise die Funktionen, wie sie im Dokument "ETSI TS 102 687 V1.1.1 (2011-07)" beschrieben sind. Die Anwendungen und Dienstleistungen im ITS-G5 beruhen auf dem kooperativen Verhalten der straßenseitigen Netzwerkeinheiten, die das Adhoc-Netzwerk VANET (VANET: vehicular ad hoc network) bilden. Das Adhoc-Netzwerk VANET ermöglicht zeitkritische Straßenverkehrsanwendungen, bei denen ein schneller Informationsaustausch notwendig ist, um den Fahrer und/oder das Fahrzeug rechtzeitig zu warnen und zu unterstützen. Um eine ordnungsgemäße Funktion des Adhoc-Netzwerks VANET zu gewährleisten, wird "Decentralized Congestion Control Mechanisms" (DCC) für den Adhoc-Kanal ADCH von ITS-G5 verwendet. DCC hat Funktionen, die sich auf mehreren Schichten der ITS-Architektur befinden. Die DCC-Mechanismen beruhen auf Wissen über den Kanal. Die Kanalzustandsinformation wird durch Kanal-Sondierung gewonnen. Kanalzustandsinformationen können durch die Methoden TPC (transmit power control), TRC (transmit rate control) und TDC (transmit datarate control) gewonnen werden. Die Methoden ermitteln die Kanalzustandsinformation in Abhängigkeit von Empfangssignalpegelschwellen oder Präambelinformationen von detektierten Paketen.

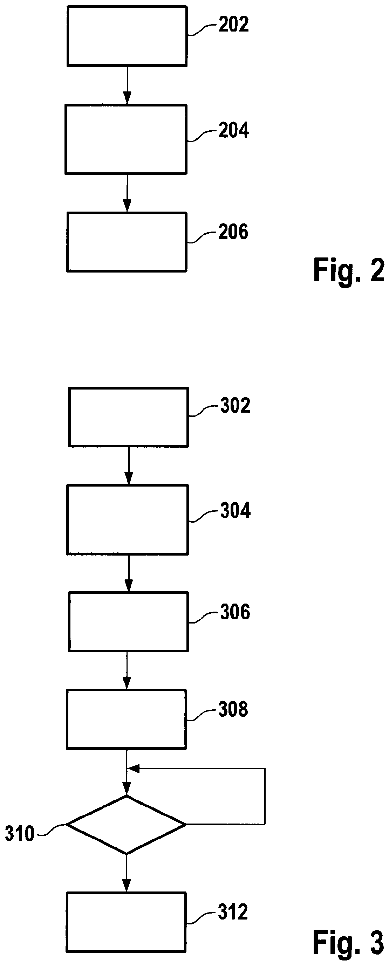

Figur 2 zeigt ein schematisches Ablaufdiagramm zum Betreiben der netzwerkinfrastrukturseitigen Netzwerkeinheit BS aus Figur 1. In einem Schritt 202 wird eine Scheduling-Request-Nachricht für den Sidelink-Kanal in einem nicht-lizenzierten Frequenzbereich auf dem Uplink-Kanal von einer der straßenseitigen Netzwerkeinheiten empfangen. In einem Schritt 204 wird eine Scheduling-Grant-Nachricht in Abhängigkeit von der Größe der bereitstehenden Daten ermittelt, wobei die Scheduling-Grant-Nachricht eine Zuweisung einer Anzahl von Sidelink-Ressourcen des Sidelink-Kanals zu der straßenseitigen Netzwerkeinheit umfasst, und wobei die zugewiesene Anzahl von Sidelink-Ressourcen ausreicht, um sowohl die bei der straßenseitigen Netzwerkeinheit bereitstehenden Daten als auch Daten von anderen straßenseitigen Netzwerkeiheiten, zu versenden. In einem Schritt 206 wird die Scheduling-Grant-Nachricht auf dem Downlink-Kanal an die straßenseitige Netzwerkeinheit versendet.

Figur 3 zeigt ein schematisches Ablaufdiagramm zum Betreiben der straßenseitigen Netzwerkeinheit UE1 und/oder UE2 aus Figur 1. In einem Schritt 302 werden Daten zum Versand an zumindest eine weitere straßenseitige Netzwerkeinheit ermittelt. In einem Schritt 304 wird die Scheduling-Request-Nachricht für den Sidelink-Kanal in dem nicht-lizenzierten Frequenzbereich ermittelt, wobei die Scheduling-Request-Nachricht eine Größe der Daten, welche zum Versand auf dem Sidelink-Kanal bei der straßenseitigen Netzwerkeinheit bereitstehen, indiziert. In einem Schritt 306 wird die Scheduling-Request-Nachricht für den Sidelink-Kanal auf einem Uplink-Kanal an eine netzwerkinfrastrukturseitige Netzwerkeinheit versendet. In einem Schritt 308 wird eine Scheduling-Grant-Nachricht empfangen, wobei die Scheduling-Grant-Nachricht eine Zuweisung einer Anzahl von Sidelink-Ressourcen des Sidelink-Kanals zu der straßenseitigen Netzwerkeinheit umfasst, und wobei die Anzahl der zugewiesenen Sidelink-Ressourcen ausreicht, um die ermittelten Daten und weitere Daten auf dem Sidelink-Kanal zu versenden. In einem Schritt 310 wird überprüft, ob die zugewiesenen Sidelink-Ressourcen auf dem Sidelink-Kanal frei sind. In einem Schritt 312 werden die ermittelten Daten auf den zugewiesenen Sidelink-Ressourcen des Sidelink-Kanals in dem nicht lizenzierten Frequenzbereich versendet, sobald die zugewiesenen Sidelink-Ressourcen auf dem Sidelink-Kanal frei sind.

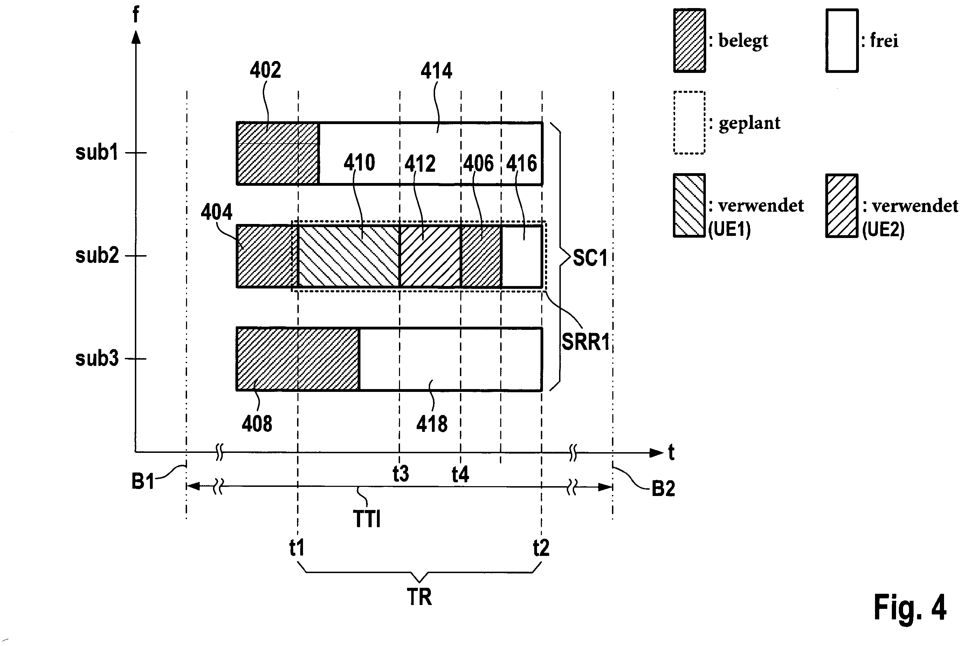

Figur 4 zeigt ein schematisches Zeit-Frequenz-Diagramm. Ein Transmittion Time Interval TTI ist eine Zeitdauer, welche von zwei Ressourcengrenzen B1, B2 begrenzt wird. Die Ressourcengrenzen B1 und B2 werden von den Netzwerkeinheiten UE1 und UE2 in Abhängigkeit von einem empfangenen Synchronisationssignal ermittelt. Innerhalb der Ressourcengrenzen B1 und B2 werden Sidelink-Ressourcen SRR1 reserviert. Die Sidelink-Ressourcen SRR1 sind zeitlich zuvor durch die netzwerkinfrastrukturseitige Netzwerkeinheit zugeteilt und über die Scheduling-Grant-Nachricht mitgeteilt worden. Die Sidelink-Ressourcen SRR1 umfassen beispielsweise eine Anzahl von Physical Ressource Blocks, PRBs. Die Sidelink-Ressourcen SRR1 umfassend vorliegend einen Subcarrier sub2 einer Anzahl von Subcarriern sub1 bis sub3 und eine Zeitdauer TR, wobei die Zeitdauer TR durch einen Freigabe-Zeitpunkt t1 und einen End-Zeitpunkt t2 definiert ist. Die Subcarrier sub1 bis sub3 können auch als Unterkanäle des Sidelink-Kanals SC1 bezeichnet werden.

Blöcke 402, 404, 406 und 408 sind durch Kommunikation auf dem Adhoc-Kanal ADCH belegt. Diese Belegung wird durch die jeweilige straßenseitige Netzwerkeinheit UE1, UE2 für das zell-basierte Drahtloskommunikationsnetzwerk lokal ermittelt. Entsprechend kann die Netzwerkeinheit UE1 zu dem Freigabe-Zeitpunkt t1 feststellen, dass der Subcarrier sub2 frei ist, um ihre Daten in einem Block 410 innerhalb der zugeteilten Sidelink-Ressourcen SRR1 zu versenden. Zu einem Zeitpunkt t3 beendet die Netzwerkeinheit UE1 ihre Übertragung von Daten. Die Netzwerkeinheit UE2 registriert zu diesem Zeitpunkt t3, dass der Subcarrier sub2 frei ist, und beginnt im Block 412 ihre Daten zu versenden. Zu einem Zeitpunkt t4 beendet die Netzwerkeinheit UE2 den Datenversand auf dem Subcarrier sub2. Dies wird beispielsweise von der Netzwerkeinheit NE3 des Adhoc-Drahtloskommunikationsnetzwerks registriert, welche zum Zeitpunkt t4 beginnt ihre Daten zu versenden, was sich in einer Belegung des Subcarriers sub2 widerspiegelt. Es sei angemerkt, dass die Netzwerkeinheit NE3 nicht notwendigerweise den Subcarrier sub2 nutzt, da ein zugrunde liegender Carrier einer Trägerfrequenz in dem Adhoc-Drahtloskommunikationsnetzwerk ein anderer sein kann. Dennoch ergibt sich für das zell-basierte Drahtloskommunikationsnetzwerk eine Belegung gemäß den Blöcken 402-408. Die Blöcke 414, 416 und 418 sind nicht belegt.

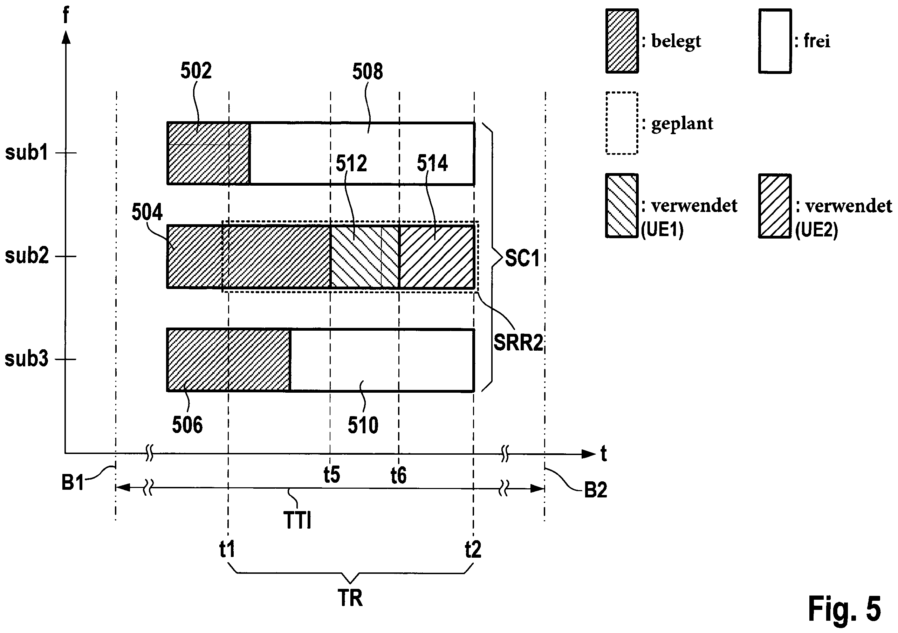

In einer Ausführungsform werden die Netzwerkeinheiten UE1 und UE2 gemeinsam gescheduled. Das bedeutet, dass die von den Netzwerkeinheiten UE1 und UE2 empfangene Scheduling-Grant-Nachricht den Zeitpunkt t3, welcher sich relativ zum Zeitpunkt t1 befindet, umfasst. Der Zeitpunkt t3 steht also in relativem Bezug zu dem Zeitpunkt t1. Dies hat den Hintergrund, dass - wie beispielsweise nachfolgend zu Figur 5 erläutert - sich der tatsächliche Sendebeginn zu dem Zeitpunkt t1 aufgrund erfolgender ITS-G5-Kommunikation verschieben kann. Folglich wird der exakte Zeitpunkt, zu dem die Netzwerkeinheit UE2 mit dem Senden beginnt und die Netzwerkeinheit UE1 mit das Senden beendet, nicht zuvor durch die Netzerkeinheit BS festgelegt, sondern die Netzwerkeinheiten UE1 und UE2 adaptieren die beiden Zeitpunkte t1 und t3 an die Belegungssituation im Drahtlosnetzwerk. Die Netzwerkeinheiten UE1 und UE2 erkennen aufgrund der Kanalbeobachtung den Zeitpunkt t1, zu dem die Sidelink-Ressourcen SRR nicht belegt sind. Da der Zeitpunkt t1 der ersten Netzwerkeinheit UE1 zugeordnet ist, sendet die Netzwerkeinheit UE1 im Block 410. Da der Zeitpunkt t2 der zweiten Netzwerkeinheit UE2 zugeordnet ist, sendet die Netzwerkeinheit UE2 im Block 412. Das Vorgenannte gilt analog auch für den Zeitpunkt t6 aus der Figur 5. Die Zeitpunkte t3 und t3 werden auch als Freigabe-Zeitpunkte bezeichnet. Durch dieses relative Scheduling hat die Netzwerkeinheit BS vorteilhaft Einfluss auf die Reihenfolge, in der die Netzwerkeinheiten UE1, UE2 senden. Folglich kann die Netzwerkeinheit BS beispielsweise die Latenzanforderungen einzelner Netzwerkeinheiten UE1, UE2 berücksichtigen.

Durch die Zuweisung der Sidelink-Ressourcen SRR1 zu einer Anzahl der Netzwerkeinheiten UE1, UE2 und dadurch, dass die Netzwerkeinheiten UE1, UE2 nach einem Listen-Before-Talk-Verfahren auf die zugewiesenen Sidelink-Ressourcen SRR1 zugreifen, wird vorteilhaft erreicht, dass die Netzwerkeinheiten NE3 und NE4 des Adhoc-Drahtloskommunikationsnetzwerks sowohl außerhalb der reservierten Sidelink-Ressourcen SRR1 als auch innerhalb der Sidelink-Ressourcen SRR1 aktiv auf den Adhoc-Kanal im gleichen Frequenzbereich wie der Sidelink-Kanal zugreifen können. Die Netzwerkeinheiten NE3 und NE4 verwenden ein Listen-Before-Talk-Verfahren, greifen also auf den jeweiligen Kanal nur dann zu, wenn eine Kanalzustandsinformation anzeigt, dass der jeweilige Kanal frei ist. Auf der anderen Seite werden die zugewiesenen Sidelink-Ressourcen SRR1 so ausreichend groß bestimmt, dass die Daten in den Blöcken 410 und 412 ungestört übertragen werden können.

Die Sidelink-Ressourcen SRR1 sind vorliegend der Gruppe von Netzwerkeinheiten UE1 und UE2 zu einem jeweiligen Versand von Daten zugewiesen. In einer alternativen Ausführungsform werden die Sidelink-Ressourcen SRR1 einer einzigen der Netzwerkeinheiten UE1 und UE2 zugewiesen.

Figur 5 zeigt ein schematisches Zeit-Frequenz-Diagramm. Die Blöcke 502, 504 und 506 bedeuten eine Belegung der Subcarrier sub1 bis sub3. Die Blöcke 508 und 510 zeigen eine Nicht-Belegung der jeweiligen Subcarrier sub1 und sub3 an. Im Unterschied zu Figur 4 wird bei der Figur 5 durch die Netzwerkeinheiten UE1 und UE2 zum Freigabe-Zeitpunkt t1 festgestellt, dass der Subcarrier sub2 durch den Block 504 belegt ist. Zu einem Zeitpunkt t5 stellt die Netzwerkeinheit UE1 fest, dass die zugewiesenen Sidelink-Ressourcen SRR2 frei sind und beginnt damit, zu dem Zeitpunkt t5 in einem Block 512 ihre Daten auf dem Subcarrier sub2 zu versenden. Zu einem Zeitpunkt t6 beendet die Netzwerkeinheit UE1 den Versand von Daten auf dem Subcarrier sub2. Zu dem Zeitpunkt t6 stellt die Netzwerkeinheit UE2 fest, dass die zugewiesenen Sidelink-Ressourcen SRR2 frei sind und beginnt in einem Block 514 ihre Daten auf dem Subcarrier sub2 zu versenden.

Vorteilhaft wird durch das durch die Netzwerkeinheiten UE1 und UE2 verwendete Listen-Before-Talk- Verfahren erreicht, dass zum Zeitpunkt t1 eine laufende Datenübertragung im Adhoc-Netzwerk bspw. des Blocks 504 nicht gestört wird. Vielmehr wird erst zum Zeitpunkt t5, d. h. nach Abschluss der Übertragung im Adhoc-Netzwerk, durch die Netzwerkeinheit UE1 auf den Subcarrier sub2 gemäß dem Block 512 zugegriffen.

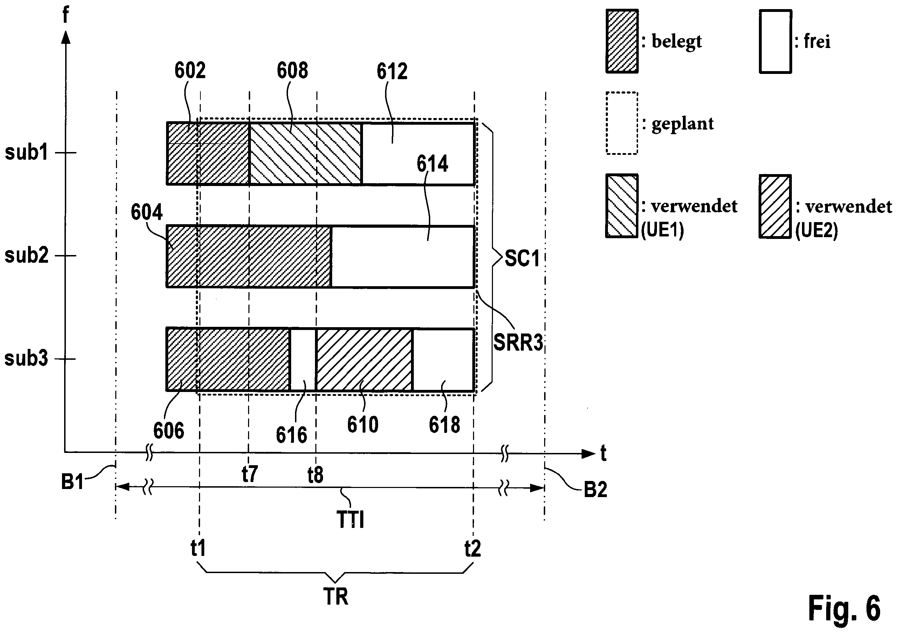

Figur 6 zeigt ein schematisches Zeit-Frequenz-Diagramm. Die Blöcke 602, 604 und 606 bedeutet eine Belegung der Subcarrier sub1, sub2 und sub3. Zum Zeitpunkt t1 wird festgestellt, dass alle verfügbaren Subcarrier sub1, sub2 und sub3 in den reservierten Sidelink-Ressourcen SRR3 belegt sind. Im Unterschied zu den Figuren 4 und 5 umfassen die Sidelink-Ressourcen SRR3 die Anzahl von Subcarriern sub1 bis sub3. Entsprechend prüfen die Netzwerkeinheiten UE1 und UE2, denen die Sidelink-Ressourcen SRR3 von der infrastrukturseitigen Netzwerkeinheit zugewiesen wurden, ob zumindest einer der Subcarrier sub1 bis sub3 frei ist oder nicht.

Zu einem Zeitpunkt t7 stellt die Netzwerkeinheit UE1 fest, dass der erste Subcarrier sub1 frei ist, und versendet ihre Daten in einem Block 608. Zu einem Zeitpunkt t8 stellt die zweite Netzwerkeinheit UE2 fest, dass der Subcarrier sub3 frei ist, und beginnt in einem Block 610 ihre Daten zu versenden. Die Blöcke 612, 614, 616 und 618 sind nicht belegt.

Vorteilhaft wird dadurch, dass die zugewiesenen Sidelink-Ressourcen SRR3 mehrere Subcarrier sub1 bis sub3 umfassen, erreicht, dass die Übermittlungswahrscheinlichkeit für die Netzwerkeinheiten UE1 und UE2 des zell-basierten Drahtloskommunikationsnetzwerks erhöht und gleichzeitig die Verzögerung des Versands in Bezug auf den Freigabe-Zeitpunkt t1 verkürzt wird.

In den Figuren 4-6 wird vereinfacht davon ausgegangen, dass die Kanalmessung zur Feststellung, ob der jeweilige Subcarrier belegt ist, und der anschließende Beginn des Versands der Daten auf dem jeweiligen Subcarrier zeitlich zusammenfallen. Selbstverständlich ist dies nicht der Fall und es findet zuerst eine zeitlich kurze Kanalmessung und anschließend der Datenversand statt.

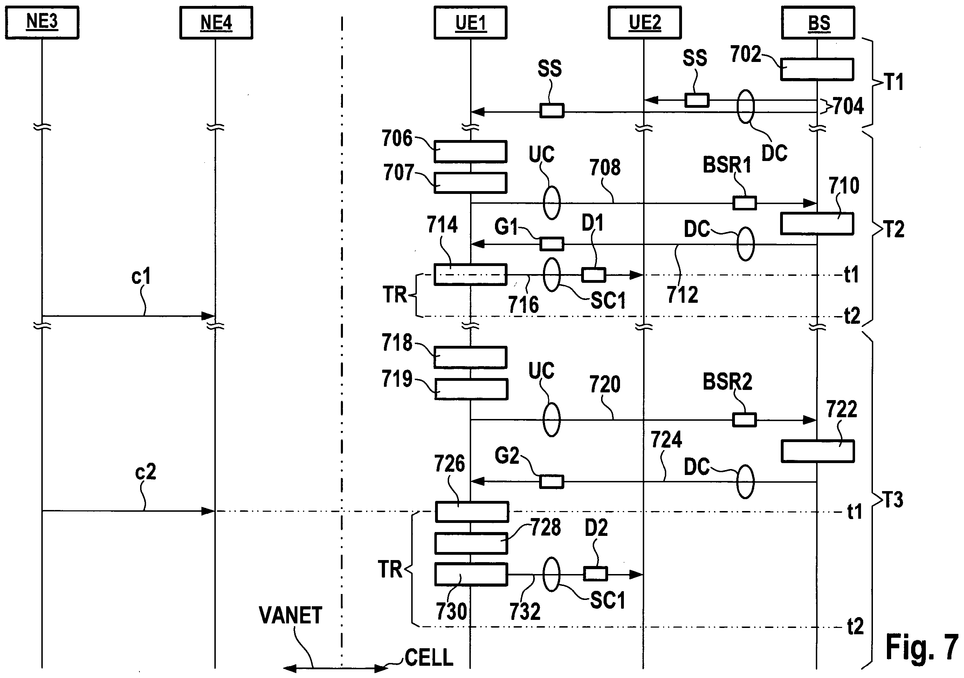

Figur 7 zeigt ein schematisches Sequenzdiagramm. Gemäß einem ersten Zeitbereich T1 ermittelt die Netzwerkeinheit BS in einem Schritt 702 ein Synchronisationssignal SS, welches auf dem Downlink-Kanal DC in einem Schritt 704 an die Netzwerkeinheiten UE1 und UE2 versendet wird. Das Synchronisationssignal SS ist beispielsweise ein Primary Synchronization Signal, PSS, oder ein Secondary Synchronization Signal, SSS. Das Synchronisationssignal SS gibt die in den Figuren 4-6 angegebenen Ressourcengrenzen B1 und B2 vor.

In einem Schritt 706 innerhalb der Zeitdauer T2 ermittelt die Netzwerkeinheit UE1 Daten D1 zum Versand an die Netzwerkeinheit UE2. In einem Schritt 707 ermittelt die Netzwerkeinheit UE1 eine Scheduling-Request-Nachricht BSR1. In einem Schritt 708 versendet die Netzwerkeinheit UE1 die Scheduling-Request-Nachricht BSR1 an die Netzwerkeinheit BS auf dem Uplink-Kanal UC. In Abhängigkeit von der Scheduling-Request-Nachricht BSR1 ermittelt die Netzwerkeinheit BS in einem Schritt 710 eine Scheduling-Grant-Nachricht G1, welche in einem Schritt 712 auf dem Downlink-Kanal DC an die Netzwerkeinheit UE1 übermittelt wird. Die Scheduling-Grant-Nachricht G1 umfasst oder indiziert die der Netzwerkeinheit UE1 zugewiesenen Sidelink-Ressourcen, welche in der Zeichnung durch die Zeitdauer TR repräsentiert werden. Zum Zeitpunkt t1 stellt die Netzwerkeinheit UE1 in einem Schritt 714 fest, dass der Sidelink-Kanal oder ein dortiger Subcarrier frei ist, und versendet die Daten D1 in einem Schritt 716 auf dem Sidelink-Kanal SC1 an die Netzwerkeinheit UE2. Ist der Versand der Daten D1 abgeschlossen, so kann noch innerhalb der Zeitdauer TR eine Kommunikation c1 in dem Adhoc-Drahtloskommunikationsnetzwerk VANET stattfinden.

Innerhalb einer Zeitdauer T3 ermittelt die Netzwerkeinheit UE1 in einem Schritt 718 Daten D2 zum Versand an die Netzwerkeinheit UE2. In einem Schritt 719 ermittelt die Netzwerkeinheit UE1 eine Scheduling-Request-Nachricht BSR2. In einem Schritt 720 versendet die Netzwerkeinheit UE1 die Scheduling-Request-Nachricht BSR2, welche die Größe der ermittelten Daten D2 indiziert, an die Netzwerkeinheit BS auf dem Uplink-Kanal UC. In Abhängigkeit von der Scheduling-Request-Nachricht BSR2, insbesondere in Abhängigkeit von der übermittelten Größe, ermittelt die Netzwerkeinheit BS in einem Schritt 722 eine Scheduling-Grant-Nachricht G2 mit zugewiesenen Sidelink-Ressourcen, welche in einem Schritt 724 auf dem Downlink-Kanal DC an die Netzwerkeinheit UE1 übermittelt wird.

Zu dem Zeitpunkt t1 führt die Netzwerkeinheit UE1 in einem Schritt 726 eine Kanalprüfung durch und stellt fest, dass die zugewiesenen Sidelink-Ressourcen beispielsweise durch eine Kommunikation c2 in dem Adhoc-Drahtloskommunikationsnetzwerk VANET, belegt sind. In einem Schritt 728 wird erneut überprüft, ob die zugewiesenen Sidelink-Ressourcen frei sind. In einem Schritt 730 stellt die erste Netzwerkeinheit UE1 fest, dass zumindest eine der zugewiesenen Sidelink-Ressourcen frei ist, und beginnt unmittelbar im Schritt 732 damit, innerhalb der zugewiesenen Sidelink-Ressourcen auf dem Sidelink-Kanal SC1 die Daten D2 an die Netzwerkeinheit UE2 zu übermitteln.

Die Scheduling-Request-Nachricht BSR1, BSR2 indiziert die Größe der ermittelten Daten D1, D2. In einer Ausführungsform handelt es sich bei der Größe um die tatsächliche Größe der Daten. Die Daten D1, D2 weisen also eine jeweilige Größe auf, welche durch die jeweilige Scheduling-Request-Nachricht BSR1, BSR2 übermittelt wird. In einer anderen Ausführungsform handelt es sich bei der Scheduling-Request-Nachricht BSR1, BSR2 um einen Index, der die Größe der ermittelten Daten indiziert. In einer weiteren Ausführungsform wird die Größe der Daten von der Netzwerkeinheit BS in Abhängigkeit von der Scheduling-Request-Nachricht BSR1, BSR2 geschätzt, womit ebenfalls eine Indikation für die Größe der ermittelten Daten gegeben ist.

Die Scheduling-Grant-Nachrichten G1, G2 umfassen die Zuweisung der Sidelink-Ressourcen SRR1, SRR2, SRR3 aus den Figuren 4, 5 oder 6, welche ausreichen, um nicht nur die ermittelten Daten sondern auch andere Daten stammend von anderen Netzwerkeinheiten auf dem Sidelink-Kanal oder dem Adhoc-Kanal zu versenden.

Vorteilhaft wird durch die Ermittlung und Reservierung von Sidelink-Ressourcen SRR1 bis SRR3 der Figuren 4, 5 oder 6 auf der Seite der netzwerkinfrastrukturseitigen Netzwerkeinheit und ein Liste-Before-Talk-Verfahren auf der Seite der straßenseitigen Netzwerkeinheit erreicht, dass bei einer Belegung eines Subcarriers durch eine Netzwerkeinheit einer anderen Netzwerktechnologie abgewartet wird und so die andere Netzwerktechnologie beispielsweise des Adhoc-Drahtloskommunikationsnetzwerks nicht benachteiligt wird. Folglich werden die Sidelink-Ressourcen zentral mit über den Sidelink-Sendebedarf hinaus gehender Kapazität reserviert. Die straßenseitigen Netzwerkeinheiten hören den zugwiesenen Sidelink-Kanal ab und senden nur, wenn dieser auf den zugewiesenen Sidelink-Ressourcen frei ist.

## Patentansprüche

1. Ein Verfahren zum Betreiben einer netzwerkinfrastrukturseitigen Netzwerkeinheit (BS) eines zell-basierten Drahtloskommunikationsnetzwerks (CELL), das Verfahren umfassend:
- Empfangen (202; 708; 720) einer Scheduling-Request-Nachricht (BSR1; BSR2) für einen Sidelink-Kanal (SC1) in einem nicht-lizenzierten Frequenzbereich (NLFB) auf einem Uplink-Kanal (UL) von einer straßenseitigen Netzwerkeinheit (UE1), wobei die Scheduling-Request-Nachricht (BSR1; BSR2) eine Größe von Daten (D1; D2), welche zum Versand auf dem Sidelink-Kanal (SC1) bei der straßenseitigen Netzwerkeinheit (UE1) bereitstehen, indiziert;
- Ermitteln (204; 710; 722) einer Scheduling-Grant-Nachricht (G1) in Abhängigkeit von der Größe der bereitstehenden Daten (D1; D2), wobei die Scheduling-Grant-Nachricht (G1) eine Zuweisung einer Anzahl von Sidelink-Ressourcen (SRR1; SRR2; SRR3) des Sidelink-Kanals (SC1) zu der straßenseitigen Netzwerkeinheit (UE1) umfasst, und wobei die zugewiesene Anzahl von Sidelink-Ressourcen (SRR1; SRR2; SRR3) ausreicht, um die bereitstehenden Daten (D1; D2) und weitere Daten von anderen straßenseitigen Netzwerkeinheiten (NE1; NE2) zu versenden; und
- Versenden (206; 712; 724) der Scheduling-Grant-Nachricht (G1) auf einem Downlink-Kanal (DC) an die straßenseitige Netzwerkeinheit (UE1).

2. Das Verfahren nach dem Anspruch 1 umfassend:
- Ermitteln (702) eines Synchronisations-Signals (SS), insbesondere eines Primary Synchronization Signal oder eines Secondary Synchronization Signal, wobei das Synchronisations-Signal (SS) Sidelink-RessourcenGrenzen (B1, B2), insbesondere Grenzen eines Radio Frame und/oder eines Radio Subframe, signalisiert;
- Versenden (704) des Synchronisations-Signals (SS) an straßenseitige Netzwerkeinheiten (UE1, UE2); und
- wobei die zugewiesenen Sidelink-Ressourcen (SRR1; SRR2; SRR3) einen Freigabe-Zeitpunkt (t1) und einen End-Zeitpunkt (t2) für eine Übermittlung auf dem Sidelink-Kanal (SC1) umfassen, wobei sich der Freigabe-Zeitpunkt (t1) und der End-Zeitpunkt (t2) innerhalb benachbarter der RessourcenGrenzen (B1, B2) befinden.

3. Das Verfahren nach einem der vorstehenden Ansprüche, wobei der Freigabe-Zeitpunkt (t1) und der End-Zeitpunkt (t2) der Sidelink-Ressourcen (SRR1; SRR2; SRR3) unsynchronisiert zu dem Synchronisationssignal (SS) ermittelt werden.

4. Das Verfahren nach einem der vorstehenden Ansprüche, wobei die zugewiesenen Sidelink-Ressourcen (SRR1; SRR2; SRR3) eine Anzahl von Subcarriern (sub1, sub2, sub3) des Sidelink-Kanals (SC1) umfasst.

5. Das Verfahren nach einem der vorstehenden Ansprüche,
- wobei ein zweiter Freigabe-Zeitpunkt (t3; t6) ermittelt wird, wobei der zweite Freigabe-Zeitpunkt (t3; t6) sich relativ zu dem ersten Freigabe-Zeitpunkt (t1) zur Sendeerlaubnis für die erste straßenseitige Netzwerkeinheit (UE1) befindet und eine Sendeerlaubnis für eine zweite straßenseitige Netzwerkeinheit (UE2) umfasst, und
- wobei die Scheduling-Grant-Nachricht (G1) den zweiten Freigabe-Zeitpunkt (t3; t6) umfasst.

6. Eine netzwerkinfrastrukturseitige Netzwerkeinheit (BS),
- wobei eine Antenne (A_BS) und ein Transceiver (T_BS) dazu eingerichtet sind, eine Scheduling-Request-Nachricht (BSR1; BSR2) für einen Sidelink-Kanal (SC1) in einem nicht-lizenzierten Frequenzbereich (NLFB) auf einem Uplink-Kanal (UL) von einer straßenseitigen Netzwerkeinheit (UE1) zu empfangen, wobei die Scheduling-Request-Nachricht (BSR1; BSR2) eine Größe von Daten (D1, D2), welche zum Versand auf dem Sidelink-Kanal (SC1) bei der straßenseitigen Netzwerkeinheit (UE1) bereitstehen, indiziert;
- wobei ein Prozessor (P_BS) dazu eingerichtet ist, eine Scheduling-Grant-Nachricht (G1) in Abhängigkeit von der Größe zu ermitteln, wobei die Scheduling-Grant-Nachricht (G1) eine Zuweisung einer Anzahl von Sidelink-Ressourcen (SRR1; SRR2; SRR3) des Sidelink-Kanals (SC1) zu der straßenseitigen Netzwerkeinheit (UE1) umfasst, und wobei die zugewiesene Anzahl von Sidelink-Ressourcen (SRR1; SRR2; SRR3) ausreicht, um die bereitstehenden Daten (D1; D2) und weitere Daten von anderen straßenseitigen Netzwerkeinheiten (NE1; NE2), zu versenden; und
- wobei die Antenne (A_BS) und der Transceiver (T_BS) dazu eingerichtet sind, die Scheduling-Grant-Nachricht (G1) auf einem Downlink-Kanal (DC) an die straßenseitige Netzwerkeinheit (UE1) zu versenden.

7. Ein Verfahren zum Betreiben einer straßenseitigen Netzwerkeinheit (UE1; UE2) eines zell-basierten Drahtloskommunikationsnetzwerks (CELL), das Verfahren umfassend:
- Ermitteln (302; 706; 718) von Daten (D1; D2) zum Versand an zumindest eine weitere straßenseitige Netzwerkeinheit (UE2);
- Ermitteln (304; 707; 719) einer Scheduling-Request-Nachricht (BSR1; BSR2) für einen Sidelink-Kanal (SC1) in einem nicht-lizenzierten Frequenzbereich (NLFB), wobei die Scheduling-Request-Nachricht (BSR1; BSR2) eine Größe der ermittelten Daten (D1; D2), welche zum Versand auf dem Sidelink-Kanal (SC1) bei der straßenseitigen Netzwerkeinheit (UE1) bereitstehen, indiziert;
- Versenden (306; 708; 720) der Scheduling-Request-Nachricht (BSR1; BSR2) für den Sidelink-Kanal (SC1) auf einem Uplink-Kanal (UC) an eine netzwerkinfrastrukturseitige Netzwerkeinheit (BS);
- Empfangen (308; 712; 724) einer Scheduling-Grant-Nachricht (G1), wobei die Scheduling-Grant-Nachricht (G1) eine Zuweisung einer Anzahl von Sidelink-Ressourcen (SRR1; SRR2; SRR3) des Sidelink-Kanals (SC1) zu der straßenseitigen Netzwerkeinheit (UE1) umfasst, und wobei die zugewiesene Anzahl von Sidelink-Ressourcen (SRR1; SRR2; SRR3) ausreicht, um die bereitstehenden Daten (D1; D2) und weitere Daten von anderen straßenseitigen Netzwerkeinheiten (NE1; NE2) zu versenden;
- Überprüfen (310; 714; 726, 728), ob die zugewiesenen Sidelink-Ressourcen (SRR1; SRR2; SRR3) auf dem Sidelink-Kanal (SC1) frei sind; und
- Versenden (312; 716; 732) der ermittelten Daten (D1; D2) auf den zugewiesenen Sidelink-Ressourcen (SRR1; SRR2; SRR3) des Sidelink-Kanals (SC1) in dem nicht lizenzierten Frequenzbereich (NLFB), sobald die zugewiesenen Sidelink-Ressourcen (SRR1; SRR2; SRR3) auf dem Sidelink-Kanal (SC1) frei sind.

8. Das Verfahren nach dem Anspruch 6 umfassend:
- Empfangen (704) eines Synchronisations-Signals (SS), insbesondere eines Primary Synchronization Signal oder eines Secondary Synchronization Signal, wobei das Synchronisations-Signal (SS) Sidelink-RessourcenGrenzen (B1, B2), insbesondere Grenzen eines Radio Frame und/oder eines Radio Subframe, signalisiert;
- wobei die zugewiesenen Sidelink-Ressourcen (SRR1; SRR2; SRR3) einen Freigabe-Zeitpunkt (t1) und einen End-Zeitpunkt (t2) für eine Übermittlung auf dem Sidelink-Kanal (SC1) umfassen, wobei sich der Freigabe-Zeitpunkt (t1) und der End-Zeitpunkt (t2) innerhalb benachbarter der Sidelink-Ressourcen-Grenzen (B1, B2) befinden.

9. Das Verfahren nach Anspruch 6 oder 7, wobei die zugewiesenen Sidelink-Ressourcen (SRR1; SRR2; SRR3) eine Anzahl von Subcarriern (sub1, sub2, sub3) umfasst, das Verfahren umfassend:
- Überprüfen (714; 728), ob die Subcarrier (sub1, sub2, sub3) der zugewiesenen Sidelink-Ressourcen (SRR1; SRR2; SRR3) auf dem Sidelink-Kanal (SC1) jeweils frei sind; und
- Versenden (718; 730) der Daten (D1; D2) auf dem Subcarrier (sub2) der zugewiesenen Sidelink-Ressourcen (SRR1; SRR2; SRR3), welcher zuerst frei ist.

10. Das Verfahren nach einem der Ansprüche 7 bis 9,
- wobei die Scheduling-Grant-Nachricht (G1) einen zweiten Freigabe-Zeitpunkt (t3; t6) umfasst, wobei der zweite Freigabe-Zeitpunkt (t3; t6) sich relativ zu einem ersten Freigabe-Zeitpunkt (t1) zur Sendeerlaubnis für eine weitere straßenseitige Netzwerkeinheit (UE1) befindet und eine Sendeerlaubnis für die betriebene straßenseitige Netzwerkeinheit (UE2) umfasst,
- wobei der erste Freigabe-Zeitpunkt (t1), insbesondere in Abhängigkeit von der Überprüfung (714; 728), ob einer der Subcarrier (sub1, sub2, sub3) der zugewiesenen Sidelink-Ressourcen (SRR1; SRR2; SRR3) auf dem Sidelink-Kanal (SC1) frei ist, ermittelt wird, wobei zu dem ersten Freigabe-Zeitpunkt (t1) eine weitere straßenseitige Netzwerkeinheit (UE1; UE2) zu senden beginnt; und
- wobei das Versenden (312; 716; 732) der ermittelten Daten (D1; D2) auf den zugewiesenen Sidelink-Ressourcen (SRR1; SRR2; SRR3) durch die betriebene straßenseitige Netzwerkeinheit (UE2) dann gestartet wird, wenn der zweite Zeitpunkt (t3;t6) relativ zu dem ersten Zeitpunkt (t1) erreicht ist.

11. Eine straßenseitige Netzwerkeinheit (UE1; UE2),
- wobei ein Prozessor (P1; P2) dazu eingerichtet ist, Daten (D1; D2) zum Versand an zumindest eine weitere straßenseitige Netzwerkeinheit (UE2) zu ermitteln (302; 706; 718) und eine Scheduling-Request-Nachricht (BSR1; BSR2) für einen Sidelink-Kanal (SC1) in einem nicht-lizenzierten Frequenzbereich (NLFB) zu ermitteln, wobei die Scheduling-Request-Nachricht (BSR1; BSR2) eine Größe der ermittelten Daten (D1; D2), welche zum Versand auf dem Sidelink-Kanal (SC1) bei der straßenseitigen Netzwerkeinheit (UE1) bereitstehen, indiziert;
- wobei eine Antenne (A1; A2) und ein Transceiver (T1; T2) dazu eingerichtet sind, die Scheduling-Request-Nachricht (BSR1; BSR2) für den Sidelink-Kanal (SC1) auf einem Uplink-Kanal (UC) an eine netzwerkinfrastrukturseitige Netzwerkeinheit (BS) zu versenden;
eine Scheduling-Grant-Nachricht (G1) zu empfangen, wobei die Scheduling-Grant-Nachricht (G1) eine Zuweisung einer Anzahl von Sidelink-Ressourcen (SRR1; SRR2; SRR3) des Sidelink-Kanals (SC1) zu der straßenseitigen Netzwerkeinheit (UE1) umfasst, und wobei die zugewiesene Anzahl von Sidelink-Ressourcen (SRR1; SRR2; SRR3) ausreicht, um die bereitstehenden Daten (D1; D2) und weitere Daten von anderen straßenseitigen Netzwerkeinheiten (NE1; NE2), zu versenden; zu überprüfen, ob die zugewiesenen Sidelink-Ressourcen (SRR1; SRR2; SRR3) auf dem Sidelink-Kanal (SC1) frei sind; und die ermittelten Daten (D1; D2) auf den zugewiesenen Sidelink-Ressourcen (SRR1; SRR2; SRR3) des Sidelink-Kanals (SC1) in dem nicht lizenzierten Frequenzbereich (NLFB) zu versenden, sobald die zugewiesenen Sidelink-Ressourcen (SRR1; SRR2; SRR3) auf dem Sidelink-Kanal (SC1) frei sind.

12. Ein Kraftfahrzeug (vehic1) umfassend die straßenseitige Netzwerkeinheit (UE1; UE2) nach dem vorstehenden Anspruch.

13. Ein Verfahren zum Betreiben eines zell-basierten Drahtloskommunikationsnetzwerks (CELL) nach einem der Ansprüche 1 bis 5 und einem der Ansprüche 7 bis 10.

## Claims

1. Method for operating a network-infrastructure network unit (BS) of a cell-based wireless communication network (CELL), the method comprising:
- receiving (202; 708; 720) a scheduling request message (BSR1; BSR2) for a sidelink channel (SC1) in an unlicensed frequency band (NLFB) from a roadside network unit (UE1) on an uplink channel (UL), the scheduling request message (BSR1; BSR2) indicating a size of data (D1; D2) that are available at the roadside network unit (UE1) for sending on the sidelink channel (SC1);
- ascertaining (204; 710; 722) a scheduling grant message (G1) on the basis of the size of the available data (D1; D2), the scheduling grant message (G1) comprising an allocation of a number of sidelink resources (SRR1; SRR2; SRR3) of the sidelink channel (SC1) to the roadside network unit (UE1), and the allocated number of sidelink resources (SRR1; SRR2; SRR3) being sufficient to send the available data (D1; D2) and further data from other roadside network units (NE1; NE2); and
- sending (206; 712; 724) the scheduling grant message (G1) to the roadside network unit (UE1) on a downlink channel (DC).

2. Method according to Claim 1, comprising:
- ascertaining (702) a synchronization signal (SS), in particular a primary synchronization signal or a secondary synchronization signal, the synchronization signal (SS) signalling sidelink resource boundaries (B1, B2), in particular boundaries of a radio frame and/or of a radio subframe;
- sending (704) the synchronization signal (SS) to roadside network units (UE1, UE2); and
- wherein the allocated sidelink resources (SRR1; SRR2; SRR3) comprise a release time (t1) and an end time (t2) for a transmission on the sidelink channel (SC1), the release time (t1) and the end time (t2) being within adjacent resource boundaries (B1, B2).

3. Method according to either of the preceding claims, wherein the release time (t1) and the end time (t2) of the sidelink resources (SRR1; SRR2; SRR3) are ascertained out of sync with the synchronization signal (SS) .

4. Method according to one of the preceding claims, wherein the allocated sidelink resources (SRR1; SRR2; SRR3) comprise a number of subcarriers (sub1, sub2, sub3) of the sidelink channel (SC1).

5. Method according to one of the preceding claims,
- wherein a second release time (t3; t6) is ascertained, the second release time (t3; t6) being situated relative to the first release time (t1) in regard to the transmit permit for the first roadside network unit (UE1) and comprising a transmit permit for a second roadside network unit (UE2), and
- wherein the scheduling grant message (G1) comprises the second release time (t3; t6).

6. Network-infrastructure network unit (BS),
- wherein an antenna (A_BS) and a transceiver (T_BS) are configured to receive a scheduling request message (BSR1; BSR2) for a sidelink channel (SC1) in an unlicensed frequency band (NLFB) from a roadside network unit (UE1) on an uplink channel (UL), the scheduling request message (BSR1; BSR2) indicating a size of data (D1; D2) that are available at the roadside network unit (UE1) for sending on the sidelink channel (SC1);
- wherein a processor (P_BS) is configured to ascertain a scheduling grant message (G1) on the basis of the size, the scheduling grant message (G1) comprising an allocation of a number of sidelink resources (SRR1; SRR2; SRR3) of the sidelink channel (SC1) to the roadside network unit (UE1), and the allocated number of sidelink resources (SRR1; SRR2; SRR3) being sufficient to send the available data (D1; D2) and further data from other roadside network units (NE1; NE2); and
- wherein the antenna (A_BS) and the transceiver (T_BS) are configured to send the scheduling grant message (G1) to the roadside network unit (UE1) on a downlink channel (DC).

7. Method for operating a roadside network unit (UE1; UE2) of a cell-based wireless communication network (CELL), the method comprising:
- ascertaining (302; 706; 718) data (D1; D2) for sending to at least one further roadside network unit (UE2) ;
- ascertaining (304; 707; 719) a scheduling request message (BSR1; BSR2) for a sidelink channel (SC1) in an unlicensed frequency band (NLFB), the scheduling request message (BSR1; BSR2) indicating a size of the ascertained data (D1; D2) that are available at the roadside network unit (UE1) for sending on the sidelink channel (SC1);
- sending (306; 708; 720) the scheduling request message (BSR1; BSR2) for the sidelink channel (SC1) to a network-infrastructure network unit (BS) on an uplink channel (UC);
- receiving (308; 712; 724) a scheduling grant message (G1), the scheduling grant message (G1) comprising an allocation of a number of sidelink resources (SRR1; SRR2; SRR3) of the sidelink channel (SC1) to the roadside network unit (UE1), and the allocated number of sidelink resources (SRR1; SRR2; SRR3) being sufficient to send the available data (D1; D2) and further data from other roadside network units (NE1; NE2);
- checking (310; 714; 726, 728) whether the allocated sidelink resources (SRR1; SRR2; SRR3) on the sidelink channel (SC1) are free; and
- sending (312; 716; 732) the ascertained data (D1; D2) on the allocated sidelink resources (SRR1; SRR2; SRR3) of the sidelink channel (SC1) in the unlicensed frequency band (NLFB) as soon as the allocated sidelink resources (SRR1; SRR2; SRR3) on the sidelink channel (SC1) are free.

8. Method according to Claim 6, comprising:
- receiving (704) a synchronization signal (SS), in particular a primary synchronization signal or a secondary synchronization signal, the synchronization signal (SS) signalling sidelink resource boundaries (B1, B2), in particular boundaries of a radio frame and/or of a radio subframe;
- wherein the allocated sidelink resources (SRR1; SRR2; SRR3) comprise a release time (t1) and an end time (t2) for a transmission on the sidelink channel (SC1), the release time (t1) and the end time (t2) being within adjacent sidelink resource boundaries (B1, B2).

9. Method according to Claim 6 or 7, wherein the allocated sidelink resources (SRR1; SRR2; SRR3) comprise a number of subcarriers (sub1, sub2, sub3), the method comprising:
- checking (714; 728) whether each of the subcarriers (sub1, sub2, sub3) of the allocated sidelink resources (SRR1; SRR2; SRR3) on the sidelink channel (SC1) is free; and
- sending (718; 730) the data (D1; D2) on the subcarrier (sub2) of the allocated sidelink resources (SRR1; SRR2; SRR3) that is free first.

10. Method according to one of Claims 7 to 9,
- wherein the scheduling grant message (G1) comprises a second release time (t3; t6), the second release time (t3; t6) being situated relative to a first release time (t1) in regard to the transmit permit for a further roadside network unit (UE1) and comprising a transmit permit for the operated roadside network unit (UE2),
- wherein the first release time (t1) is ascertained, in particular on the basis of the check (714; 728) to determine whether one of the subcarriers (sub1, sub2, sub3) of the allocated sidelink resources (SRR1; SRR2; SRR3) on the sidelink channel (SC1) is free, a further roadside network unit (UE1; UE2) beginning to transmit at the first release time (t1); and
- wherein the sending (312; 716; 732) of the ascertained data (D1; D2) on the allocated sidelink resources (SRR1; SRR2; SRR3) by the operated roadside network unit (UE2) is started when the second time (t3; t6) relative to the first time (t1) is reached.

11. Roadside network unit (UE1; UE2),
- wherein a processor (P1; P2) is configured to ascertain (302; 706; 718) data (D1; D2) for sending to at least one further roadside network unit (UE2) and to ascertain a scheduling request message (BSR1; BSR2) for a sidelink channel (SC1) in an unlicensed frequency band (NLFB), the scheduling request message (BSR1; BSR2) indicating a size of the ascertained data (D1; D2) that are available at the roadside network unit (UE1) for sending on the sidelink channel (SC1);
- wherein an antenna (A1; A2) and a transceiver (T1; T2) are configured to send the scheduling request message (BSR1; BSR2) for the sidelink channel (SC1) to a network-infrastructure network unit (BS) on an uplink channel (UC); to receive a scheduling grant message (G1), the scheduling grant message (G1) comprising an allocation of a number of sidelink resources (SRR1; SRR2; SRR3) of the sidelink channel (SC1) to the roadside network unit (UE1), and the allocated number of sidelink resources (SRR1; SRR2; SRR3) being sufficient to send the available data (D1; D2) and further data from other roadside network units (NE1; NE2); to check whether the allocated sidelink resources (SRR1; SRR2; SRR3) on the sidelink channel (SC1) are free; and to send the ascertained data (D1; D2) on the allocated sidelink resources (SRR1; SRR2; SRR3) of the sidelink channel (SC1) in the unlicensed frequency band (NLFB) as soon as the allocated sidelink resources (SRR1; SRR2; SRR3) on the sidelink channel (SC1) are free.

12. Motor vehicle (vehic1) comprising the roadside network unit (UE1; UE2) according to the preceding claim.

13. Method for operating a cell-based wireless communication network (CELL) according to one of Claims 1 to 5 and one of Claims 7 to 10.

## Revendications

1. Procédé permettant de faire fonctionner une unité de réseau côté infrastructure de réseau (BS) d'un réseau de communication sans fil à base de cellules (CELL), le procédé comprenant les étapes consistant à :
- recevoir (202 ; 708 ; 720) un message de demande de planification (BSR1 ; BSR2) pour un canal de liaison latérale (SC1) dans une gamme de fréquences sans licence (NLFB) sur un canal de liaison montante (UL) en provenance d'une unité de réseau côté route (UE1), le message de demande de planification (BSR1 ; BSR2) indexant un volume de données (D1 ; D2) disponibles pour l'envoi sur le canal de liaison latérale (SC1) au niveau de l'unité de réseau côté route (UE1) ;
- déterminer (204 ; 710 ; 722) un message d'autorisation de planification (G1) en fonction du volume des données disponibles (D1 ; D2), le message d'autorisation de planification (G1) comprenant une attribution d'un nombre de ressources de liaison latérale (SRR1 ; SRR2 ; SRR3) du canal de liaison latérale (SC1) à l'unité de réseau côté route (UE1), et le nombre attribué de ressources de liaison latérale (SRR1 ; SRR2 ; SRR3) étant suffisant pour envoyer les données disponibles (D1 ; D2) et d'autres données provenant d'autres unités de réseau côté route (NE1 ; NE2) ; et
- envoyer (206 ; 712 ; 724) le message d'autorisation de planification (G1) sur un canal de liaison descendante (DC) à l'unité de réseau côté route (UE1).

2. Procédé selon la revendication 1, comprenant les étapes consistant à :
- déterminer (702) un signal de synchronisation (SS), en particulier un signal de synchronisation primaire ou un signal de synchronisation secondaire, le signal de synchronisation (SS) signalant des limites de ressources de liaison latérale (B1, B2), en particulier des limites d'une trame radio et/ou d'une sous-trame radio ;
- envoyer (704) le signal de synchronisation (SS) à des unités de réseau côté route (UE1, UE2) ; et
- les ressources de liaison latérale attribuées (SRR1 ; SRR2 ; SRR3) comprenant un temps de libération (t1) et un temps de fin (t2) pour une transmission sur le canal de liaison latérale (SC1), le temps de libération (t1) et le temps de fin (t2) se trouvant dans des limites voisines parmi les limites de ressources voisines (B1, B2).

3. Procédé selon l'une quelconque des revendications précédentes, dans lequel le temps de libération (t1) et le temps de fin (t2) des ressources de liaison latérale (SRR1 ; SRR2 ; SRR3) sont déterminés de manière non synchronisée avec le signal de synchronisation (SS).

4. Procédé selon l'une quelconque des revendications précédentes, dans lequel les ressources de liaison latérale attribuées (SRR1 ; SRR2 ; SRR3) comprennent un nombre de sous-porteuses (sub1, sub2, sub3) du canal de liaison latérale (SC1).

5. Procédé selon l'une quelconque des revendications précédentes,
- dans lequel un deuxième temps de libération (t3 ; t6) est déterminé, le deuxième temps de libération (t3 ; t6) étant situé par rapport au premier temps de libération (t1) pour la permission d'envoi pour la première unité de réseau côté route (UE1) et comprenant une permission d'envoi pour une deuxième unité de réseau côté route (UE2), et
- le message d'autorisation de planification (G1) comprenant le deuxième temps de libération (t3 ; t6).

6. Unité de réseau côté infrastructure de réseau (BS),
- dans laquelle une antenne (A_BS) et un émetteur-récepteur (T_BS) sont aménagés pour recevoir un message de demande de planification (BSR1 ; BSR2) pour un canal de liaison latérale (SC1) dans une gamme de fréquences sans licence (NLFB) sur un canal de liaison montante (UL) en provenance d'une unité de réseau côté route (UE1), le message de demande de planification (BSR1 ; BSR2) indexant un volume de données (D1, D2) disponibles pour l'envoi sur le canal de liaison latérale (SC1) au niveau de l'unité de réseau côté route (UE1) ;
- un processeur (P_BS) étant aménagé pour déterminer un message d'autorisation de planification (G1) en fonction du volume, le message d'autorisation de planification (G1) comprenant une attribution d'un nombre de ressources de liaison latérale (SRR1 ; SRR2 ; SRR3) du canal de liaison latérale (SC1) à l'unité de réseau côté route (UE1), et le nombre attribué de ressources de liaison latérale (SRR1 ; SRR2 ; SRR3) étant suffisant pour envoyer les données disponibles (D1 ; D2) et d'autres données provenant d'autres unités de réseau côté route (NE1 ; NE2) ; et
- l'antenne (A_BS) et l'émetteur-récepteur (T_BS) étant aménagés pour envoyer le message d'autorisation de planification (G1) sur un canal de liaison descendante (DC) à l'unité de réseau côté route (UE1).

7. Procédé permettant de faire fonctionner une unité de réseau côté route (UE1 ; UE2) d'un réseau de communication sans fil à base de cellules (CELL), le procédé comprenant les étapes consistant à :
- déterminer (302 ; 706 ; 718) des données (D1 ; D2) pour l'envoi à au moins une autre unité de réseau côté route (UE2) ;
- déterminer (304 ; 707 ; 719) un message de demande de planification (BSR1 ; BSR2) pour un canal de liaison latérale (SC1) dans une gamme de fréquences sans licence (NLFB), le message de demande de planification (BSR1 ; BSR2) indexant un volume des données déterminées (D1 ; D2) disponibles pour l'envoi sur le canal de liaison latérale (SC1) au niveau de l'unité de réseau côté route (UE1) ;
- envoyer (306 ; 708 ; 720) le message de demande de planification (BSR1 ; BSR2) pour le canal de liaison latérale (SC1) sur un canal de liaison montante (UC) à une unité de réseau côté infrastructure de réseau (BS) ;
- recevoir (308 ; 712 ; 724) un message d'autorisation de planification (G1), le message d'autorisation de planification (G1) comprenant une attribution d'un nombre de ressources de liaison latérale (SRR1 ; SRR2 ; SRR3) du canal de liaison latérale (SC1) à l'unité de réseau côté route (UE1), et le nombre attribué de ressources de liaison latérale (SRR1 ; SRR2 ; SRR3) étant suffisant pour envoyer les données disponibles (D1 ; D2) et d'autres données provenant d'autres unités de réseau côté route (NE1 ; NE2) ;
- vérifier (310 ; 714 ; 726, 728) si les ressources de liaison latérale attribuées (SRR1 ; SRR2 ; SRR3) sur le canal de liaison latérale (SC1) sont libres ; et
- envoyer (312 ; 716 ; 732) les données déterminées (D1 ; D2) sur les ressources de liaison latérale attribuées (SRR1 ; SRR2 ; SRR3) du canal de liaison latérale (SC1) dans une gamme de fréquences sans licence (NLFB) dès que les ressources de liaison latérale attribuées (SRR1 ; SRR2 ; SRR3) sur le canal de liaison latérale (SC1) sont libres.

8. Procédé selon la revendication 6, comprenant les étapes consistant à :
- recevoir (704) un signal de synchronisation (SS), en particulier un signal de synchronisation primaire ou un signal de synchronisation secondaire, le signal de synchronisation (SS) signalant des limites de ressources de liaison latérale (B1, B2), en particulier des limites d'une trame radio et/ou d'une sous-trame radio ;
- les ressources de liaison latérale attribuées (SRR1 ; SRR2 ; SRR3) comprenant un temps de libération (t1) et un temps de fin (t2) pour une transmission sur le canal de liaison latérale (SC1), le temps de libération (t1) et le temps de fin (t2) se trouvant dans des limites voisines parmi les limites de ressources de liaison latérale (B1, B2).

9. Procédé selon la revendication 6 ou 7, dans lequel les ressources de liaison latérale attribuées (SRR1 ; SRR2 ; SRR3) comprennent un nombre de sous-porteuses (sub1, sub2, sub3), le procédé comprenant les étapes consistant à :
- vérifier (714 ; 728) si les sous-porteuses (sub1, sub2, sub3) des ressources de liaison latérale attribuées (SRR1 ; SRR2 ; SRR3) sur le canal de liaison latérale (SC1) sont libres respectivement ; et
- envoyer (718 ; 730) les données (D1 ; D2) sur la sous-porteuse (sub2) des ressources de liaison latérale attribuées (SRR1 ; SRR2 ; SRR3) qui est libre en premier.

10. Procédé selon l'une quelconque des revendications 7 à 9,
- dans lequel le message d'autorisation de planification (G1) comprend un deuxième temps de libération (t3 ; t6), le deuxième temps de libération (t3 ; t6) étant situé par rapport à un premier temps de libération (t1) pour la permission d'envoi pour une autre unité de réseau côté route (UE1) et comprenant une permission d'envoi pour l'unité de réseau côté route (UE2) en fonctionnement,
- le premier temps de libération (t1) étant déterminé, en particulier en fonction de la vérification (714 ; 728) si l'une des sous-porteuses (sub1, sub2, sub3) des ressources de liaison latérale attribuées (SRR1 ; SRR2 ; SRR3) sur le canal de liaison latérale (SC1) est libre, une autre unité de réseau côté route (UE1 ; UE2) commençant l'envoi au premier temps de libération (t1) ; et
- l'envoi (312 ; 716 ; 732) des données déterminées (D1 ; D2) sur les ressources de liaison latérale attribuées (SRR1 ; SRR2 ; SRR3) étant lancé par l'unité de réseau côté route en fonctionnement (UE2) lorsque le deuxième temps (t3 ; t6) est atteint par rapport au premier temps (t1).

11. Unité de réseau côté route (UE1 ; UE2),
- dans laquelle un processeur (P1 ; P2) est aménagé pour déterminer (302 ; 706 ; 718) des données (D1 ; D2) pour l'envoi à au moins une autre unité de réseau côté route (UE2) et pour déterminer un message de demande de planification (BSR1 ; BSR2) pour un canal de liaison latérale (SC1) dans une gamme de fréquences sans licence (NLFB), le message de demande de planification (BSR1 ; BSR2) indexant un volume des données déterminées (D1 ; D2) disponibles pour l'envoi sur le canal de liaison latérale (SC1) au niveau de l'unité de réseau côté route (UE1) ;
- une antenne (A1 ; A2) et un émetteur-récepteur (T1 ; T2) étant aménagés pour envoyer le message de demande de planification (BSR1 ; BSR2) pour le canal de liaison latérale (SC1) sur un canal de liaison montante (UC) à une unité de réseau côté infrastructure de réseau (BS) ; pour recevoir un message d'autorisation de planification (G1), le message d'autorisation de planification (G1) comprenant une attribution d'un nombre de ressources de liaison latérale (SRR1 ; SRR2 ; SRR3) du canal de liaison latérale (SC1) à l'unité de réseau côté route (UE1), et le nombre attribué de ressources de liaison latérale (SRR1 ; SRR2 ; SRR3) étant suffisant pour envoyer les données disponibles (D1 ; D2) et d'autres données provenant d'autres unités de réseau côté route (NE1 ; NE2) ; pour vérifier si les ressources de liaison latérale attribuées (SRR1 ; SRR2 ; SRR3) sur le canal de liaison latérale (SC1) sont libres ; et pour envoyer les données déterminées (D1 ; D2) sur les ressources de liaison latérale attribuées (SRR1 ; SRR2 ; SRR3) du canal de liaison latérale (SC1) dans la gamme de fréquences sans licence (NLFB) dès que les ressources de liaison latérale attribuées (SRR1 ; SRR2 ; SRR3) sur le canal de liaison latérale (SC1) sont libres.

12. Véhicule automobile (vehic1), comprenant l'unité de réseau côté route (UE1 ; UE2) selon la revendication précédente.

13. Procédé permettant de faire fonctionner un réseau de communication sans fil à base de cellules (CELL) selon l'une quelconque des revendications 1 à 5 et l'une quelconque des revendications 7 à 10.
